# EUROPEAN PATENT SPECIFICATION

(11) **EP 2 955 067 B1**
(45) Date of publication and mention of the grant of the patent: **20.09.2017**
(21) Application number: 15170987.0
(22) Date of filing: 08.06.2015
(51) Int. Cl.: B60R 22/20

(54) **SEAT BELT HEIGHT ADJUSTER**
SICHERHEITSGURTHÖHENVERSTELLER
DISPOSITIF DE RÉGLAGE EN HAUTEUR POUR CEINTURE DE SÉCURITÉ

(30) Priority: 12.06.2014 GB 201410471
(43) Date of publication of application: 16.12.2015
(73) Proprietor: Nissan Motor Manufacturing (UK) Ltd., Cranfield Bedfordshire MK43 0DB (GB)
(72) Inventor: Tanner, Kevin, Bedfordshire, MK43 0DB (GB)

(56) References cited:
- DE-A1- 3 523 422
- DE-A1- 3 627 087
- GB-A- 2 263 620
- JP-A- H08 142 795
- US-A1- 2005 242 563

## Description

### Field of the invention

The invention relates to a seat belt height adjuster. In particular, but not exclusively, the invention relates to a seat belt height adjuster for use in automotive vehicles.

### Background to the invention

Seat belts are well-known for use in passenger vehicles to restrain occupants in their seat in the event of an impact. In modern vehicles three-point seat belts are most common. In use, the three-point belt extends from a lower anchor point that is secured to the vehicle body over the lap of the occupant to a releasable buckle on the opposite side of the seat. From there, the belt passes upwardly across the occupant's chest, through an upper loop secured to the vehicle body, to a biased reel retractor. The upper loop is approximately at the height of the occupant's head or shoulder.

For optimum safety and comfort the seat belt should pass between the shoulder and the neck. To allow for the differing size, in particular shoulder height, of occupants, it is known to mount the upper loop on a height-adjustable mechanism. The height-adjustable mechanism must be sufficiently strong to withstand the loads applied during an impact, but the release mechanism for height adjustment must also be sufficiently simple and smooth in operation to satisfy the demands of the customer in terms of both function and tactile quality.

A number of known seat belt height adjusters have release mechanisms that comprise many complex components which make them expensive to manufacture and assemble. Others provide an actuator for release of the seat belt height adjuster mechanism that has an uneven or inconsistent biasing force which can result in angular rotation or twisting of the actuator in its guides resulting in undesirable binding of the actuator and an unpleasant juddering sensation being transmitted to the user.

One example of an actuator according to the preamble of claim 1 is shown in GB2263620A, which discloses an actuator with a trim panel section that has a spring loaded trigger section. The configuration disclosed does not guarantee a consistent biasing force.

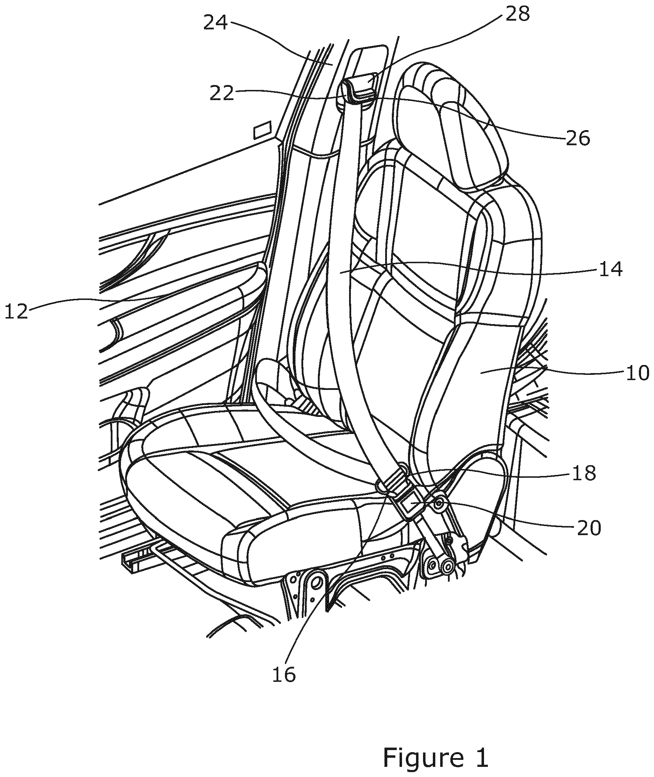

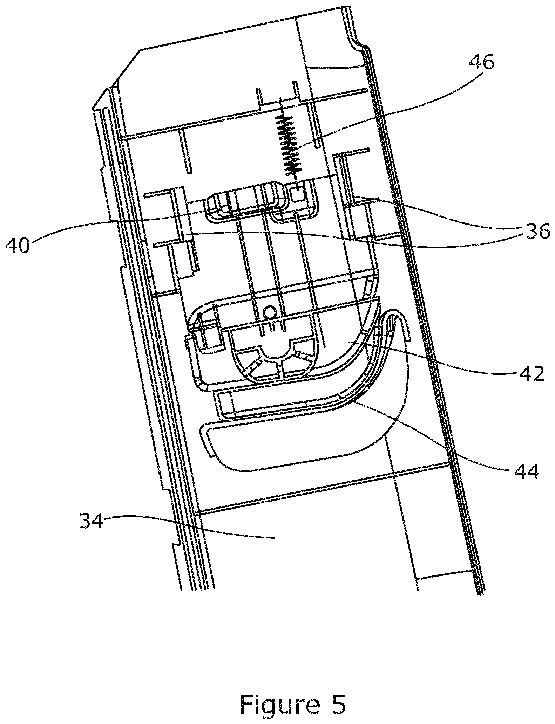

In this respect, reference is made to figures 1 to 5 which illustrate an example of a known seat belt height adjuster.

Figure 1 shows a perspective view of a vehicle interior with a front seat 10, a side door 12 and a three-point seat belt 14. The seat belt extends from a lower anchor point (not shown) at the side of the seat 10 to a lower belt loop 16 on a releasable tab portion 18 that in use is engaged in a buckle 20 on the other side of the seat 10. The belt 14 then continues diagonally upward to an upper mounting point 22 in the B-pillar 24. At the upper mounting point 22 the seat belt 14 passes through an upper belt loop 26 which is attached to a seat belt height adjuster 28.

Optimal positioning of the seat belt across the chest for the wearer's safety and comfort is achieved by movement of the seat belt height adjuster 28 in a range between an upper and lower position. The range of adjustment is sufficient for an adult to position the upper belt loop 26 such that the seat belt 14 passes between their neck and shoulder.

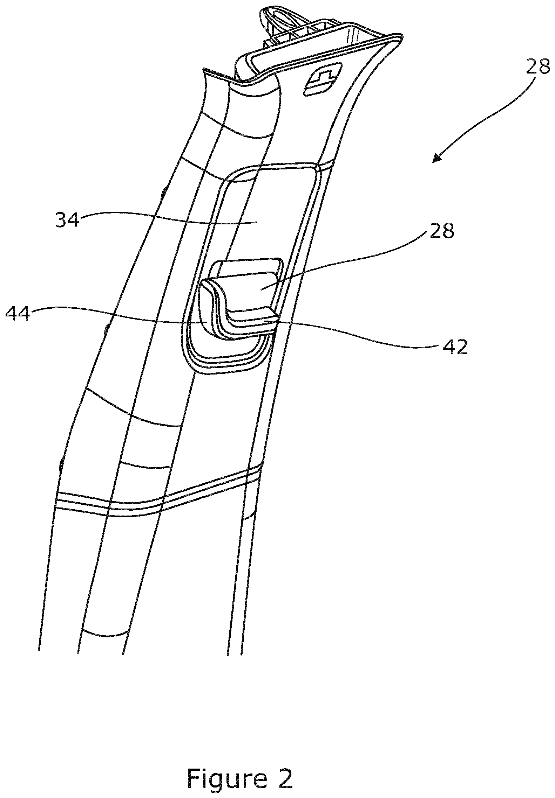

Figures 2, 3 and 4 show the seat belt height adjuster 28 in more detail. In overview, the seat belt adjuster 28 comprises a guide rail 30, on which slides a positioning mechanism 32. Attached to the positioning mechanism 32 is an actuator support 34 which slides as one with the positioning mechanism 32 on the guide rail 30. An actuator 38 is retained in guides 36 on the inside face of an actuator support 34. The actuator 38 comprises an arm 40 that extends over the positioning mechanism 32 and which is operable to trigger the positioning mechanism 32. At the front, the actuator 38 comprises an upper finger grip 42 that is positioned over a lower finger grip 44 defined by the actuator support 34 and, together, the opposed finger grips 42, 44 provide a means for a user to operate the actuator.

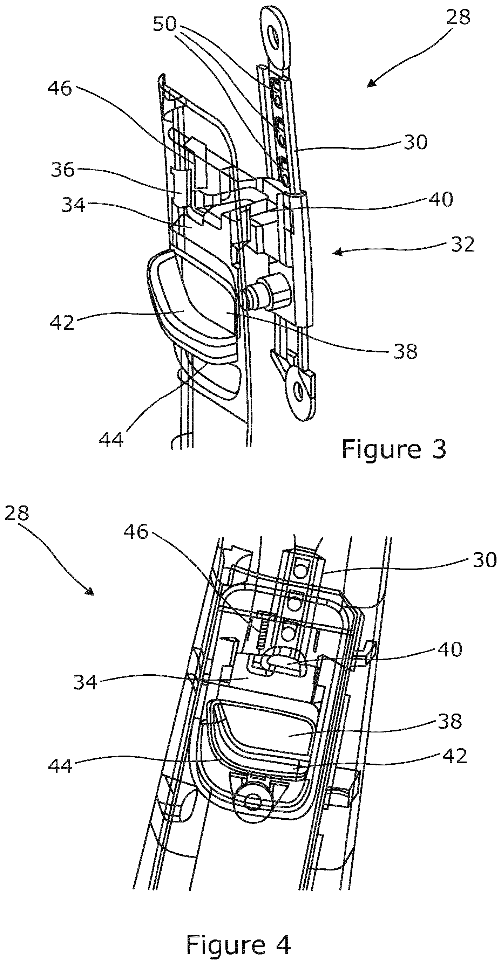

The seat belt height adjuster 28 is operable to secure a seat belt loop in a selected position and has a locked and an unlocked state. In the locked state, as shown in Figure 3, suitable locking means (not shown) such as a retractable bolt is biased to engage one of several detents 50 in the guide rail 30 thereby preventing movement of the seat belt height adjuster 28. In this state, the upper finger grip 42 of the actuator 38 is in a first position in which it is spaced from the lower finger grip 44 on the actuator support 34 by the biasing force of a metal coil spring 46 that is mounted between the actuator 38 and the actuator support 34.

To achieve the unlocked state, the opposed finger grips 42, 44 are squeezed together which moves the actuator 38 downwards with respect to the actuator support 34. The downward movement of the actuator 38 triggers the positioning mechanism 32 of the seat belt height adjuster 28 so it can slide freely on the guide rail.

In this known arrangement, the restoring force of the spring 46 is applied to the actuator 38 as a point load where it is attached and this may be offset laterally from the activating force applied to the actuator 38 by a user. This can cause the actuator 38 to twist in its guides 36 which can, in turn, result in binding.

### Summary of the invention

It is against this background that the invention has been devised. Accordingly, the invention provides a seat belt height adjuster for a seatbelt loop. The seat belt height adjuster may be mounted in any suitable position within the vehicle to provide the correct geometry of the seat-belt in operation. The B, C or D pillars of a vehicle are common mounting points. The seat belt height adjuster of the invention comprises:
a positioning mechanism slidable on a guide rail and operable to secure a seatbelt loop in a selected position on the guide rail, the positioning mechanism having a first operating state in which the positioning mechanism is locked to the guide rail a second operating state in which the positioning mechanism able to slide on the guide rail;
an actuator operable to control the operating state of the positioning mechanism, the actuator being movable with respect to an actuator support between a first position in which the positioning mechanism is in first operating state and a second position in which the positioning mechanism is in the second operating state; and
biasing means configured to bias the actuator against the actuator support, wherein the biasing means applies a restoring force that is distributed across a transverse region of the actuator; wherein the transverse region extends across at least 20% of the width of the actuator, the biasing means is provided integral to the actuator, the biasing means being a spring member comprising of a plurality of first spring elements configured to act through a common spring abutment, and wherein the plurality of first spring elements are linked by a plurality of second transverse spring elements. The application of a restoring force by the biasing means distributed across a transverse region of the actuator reduces the likelihood of the actuator to rotate or twist in operation with respect to the actuator support.

While any position of the biasing means with respect to the width of the actuator is contemplated, in one embodiment, the biasing means is positioned centrally with respect to the width of the actuator. "Centrally" being defined to mean that the centre of the biasing means is positioned substantially in the centre of the actuator with respect to the actuator's dimension approximately perpendicular to the linear movement from its first to its second operating position.

When the biasing means is integral to the actuator, the biasing means may form a unitary component with the actuator. In one embodiment the actuator is a moulded component with the actuator.

Turning to the biasing means, in one configuration, the biasing means is a spring member. In an embodiment of the invention, the spring member includes a plurality of first spring elements configured to act through a common spring abutment. To enhance the structural rigidity of the spring member, in certain embodiments, the plurality of first spring elements are linked by a plurality of second spring elements.

In one embodiment, the plurality of first spring elements have a zigzag structure, and in a further embodiment, the spring member is shaped to define a lattice structure.

### Brief description of the drawings

In order that the invention may be more readily understood, preferred non-limiting embodiments thereof will now be described, by way of example only, with reference to the accompanying drawings, in which:
Figure 1 is a perspective view of the interior of a passenger vehicle showing a front seat and a three-point seat belt;
Figure 2 is a perspective view of a seat belt height adjuster in situ in the B-pillar of a passenger vehicle;
Figures 3 and 4 show views of an example seat belt height adjuster in isolation from the B-pillar of a passenger vehicle. Certain components are depicted as transparent to better show the arrangement of the internal components; and
Figure 5 shows a rear view of the actuator of the seat belt height adjuster in isolation.
Figures 6a and 6b are rear views of an actuator of a seat belt height adjuster in accordance with an embodiment of the invention, in which the actuator is shown in two different operating positions;
Figure 7 is a side view of the actuator of Figures 6a and 6b;
Figure 8 shows a rear perspective view of the actuator of Figures 6a, 6b and 7;
Figures 9a and 9b show rear perspective cross-sectional views of a seat belt height adjuster including the actuator of Figures 6a, 6b, 7 and 8, in which the actuator is shown in two different operating positions; and
Figures 10a and 10b show an alternative embodiment of an actuator that can also be used in the seat belt height adjuster of Figures 9a and 9b, in which the actuator is shown in two different operating positions.

### Detailed description of embodiments of the invention

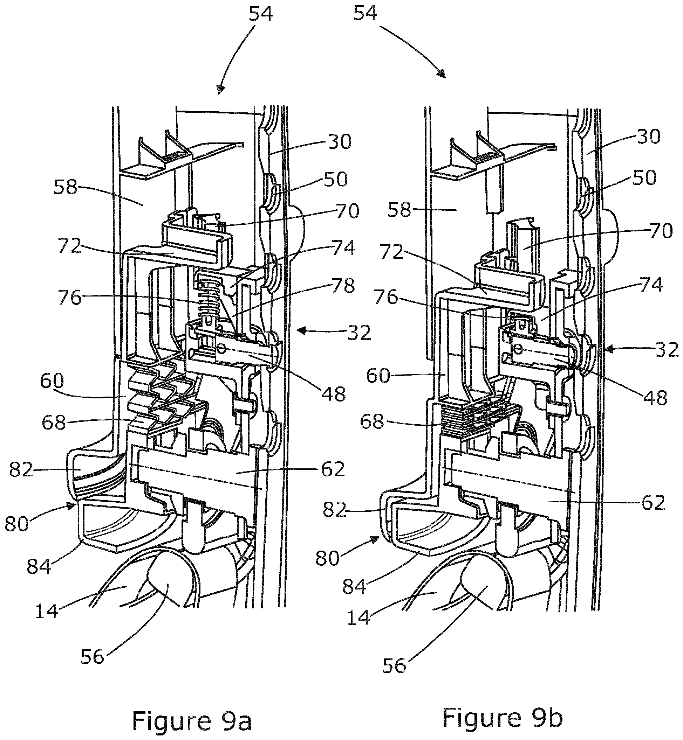

Reference will first be made to Figures 9a and 9b which show a seat belt height adjuster 54 according to an embodiment of the invention. Here, the seat belt height adjuster 54 is slidably mounted on a guide rail 30 which is securely fastened to the vehicle body. At this point, it should be noted that the seat belt height adjuster 54 has some components in common with the seat belt height adjuster described above with reference to Figures 1 to 5. Therefore common reference numerals may be used here as appropriate.

A seat belt loop 56, through which the seat belt 14 passes, is shown mounted at the bottom of the seat belt height adjuster 54. Generally vertical movement of the seat belt height adjuster 54 therefore allows for the vertical adjustment of the seat belt loop 56.

In overview, the seat belt height adjuster 54 comprises a positioning mechanism 32, an actuator support 58, and an actuator 60. The positioning mechanism 32, and the actuator support 58, on which the actuator 60 is mounted, are connected by a coupler 62 so that the positioning mechanism 32, the actuator support 58 and the actuator 60 move as a single unit up and down the guide rail 30.

As has been mentioned, Figures 9a and 9b show the seat belt height adjuster 54 in two different operating states; Figure 9a shows the positioning mechanism being locked to the guide rail 30, and Figure 9b shows the positioning mechanism in an unlocked state where it is able to slide relative to the guide rail 30.

In more detail, the positioning mechanism 32 includes a retractable locking bolt 48 that is acted on by an operating trigger 74 under the influence of the actuator 60.

As shown in Figure 9a, in a locked state, the locking bolt 48 is biased to engage one of several detents 50 in the guide rail 30 thereby preventing movement of the seat belt height adjuster 54.

In contrast, as shown in Figure 9b, in the unlocked state the locking bolt 48 is retracted from the detent 50 so that the seat belt height adjuster 54 is free to slide on the guide rail 30. The position of the locking bolt 48 is controlled by the position of the operating trigger 74 which, in turn, is controlled by the actuator 60, as will be described. The operating trigger 74 is biased into an upper position by a spring 76 and includes an inclined surface 78 that acts on the locking bolt 48 to retract it from the detent 50 when the operating trigger 74 is pressed by the actuator 60.

In order to operate the positioning mechanism 32 between its locked and unlocked states, the actuator 60 is moveable with respect to the actuator support 58 between a first, upper, position and a second, lower, position. To do this, the actuator 60 includes an operating arm 72 which acts on the operating trigger 74 of the positioning mechanism 32. The actuator 60 is biased into the first position by way of biasing means 68 which bears against the actuator support 58.

In order to move the actuator 60 between the first and second positions, the actuator 60 and the actuator support 58 are shaped to define together a grip formation 80. The grip formation 80 includes a first grip portion 82 defined by the actuator 60 and a second grip portion 84 defined by the actuator support 58. As can be seen, the second grip portion 84 is shaped like a ledge and the first grip portion 82 is shaped so as to overhang and accommodate the second grip portion 84. In use, therefore, the complementary shape of the first and second grip portions 82, 84 enables the user easily to grasp the grip formation 80 and squeeze it together. In doing so, the actuator 60 is moved from the first, upper, position, downwards into the second, lower, position which, accordingly, triggers the positioning mechanism 32 into the unlocked state.

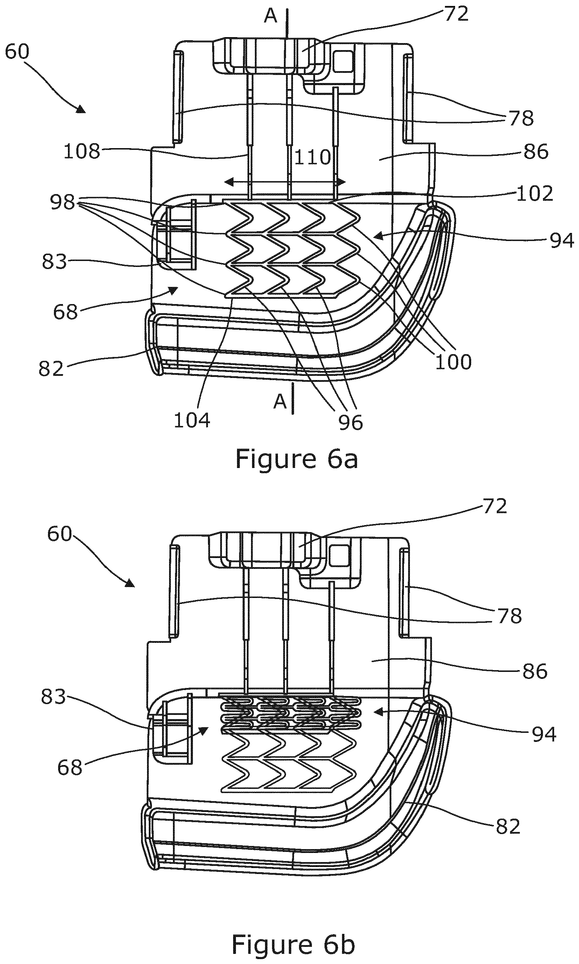

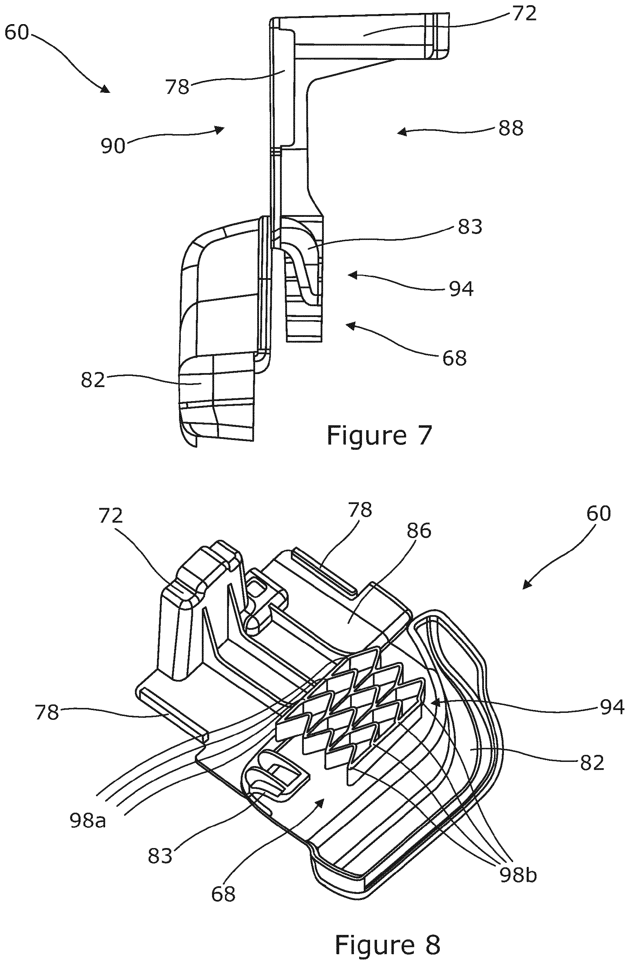

Having described the functionality of the positioning mechanism 32 and the actuator 60 in general terms, the structure of the actuator 60 will now be described in more detail, with particular reference to Figures 6a, 6b, 7 and 8.

In this embodiment, the actuator 60 includes a generally planar actuator body 86 defining inboard and outboard surfaces 88, 90. The first grip portion 82 is defined along the lower edge of the outboard surface 90, and the operating arm 72 extends from the upper edge of the inboard surface 88. Guide runners 78 are provided on each side of the body 86 which serve to engage respective guides 70 on the actuator support 58 (shown in Figures 9a and 9b). As has been mentioned, the actuator 60 is also provided with biasing means 68 which bears against the actuator support 58.

Here the biasing means 68 is shown as being defined approximately in the middle of the inboard surface 88. Note that the biasing means 68 is shown uncompressed in Figure 6a which corresponds to the first position of the actuator 60 and is shown compressed in Figure 6b corresponding to the second actuator position.

Conveniently, in this embodiment the biasing means 68 is moulded so as to be a unitary component with the actuator 60, for example by way of an injection moulding process employing suitable plastics such as acrylonitrile butadiene styrene (ABS), nylon, polypropylene, polyvinylchloride (PVC), or thermoplastic elastomers such as TPE, TPV or TPU. Polypropylene (PP) may be preferred for visual area appearance and spring durability performance requirements. This provides a cost effective way of producing the actuator and the biasing means as one part. However, it should be noted that this is not essential and, instead, the biasing means 68 could be a separate part to the actuator body 86, but still integral with it. Likewise, it is not essential for the actuator 60 to be injection moulded from plastics, although this is currently preferred for mass production.

In more detail, the biasing means 68 includes a spring member 94 that somewhat resembles a lattice or a honeycomb. In this context, the spring member 94 includes a plurality of first, upright, spring elements 96 and a plurality of second, transverse, spring elements 98, four of each being shown in this embodiment. In effect, therefore, the interconnected arrangement of spring elements 96, 98 create a cellular structure, being formed of an array of compressible cells.

The upright spring elements 96 are non-linear so as to have a zigzag structure defining first and second ends 98a, 98b. In the embodiment of Figures 6a to 8, each of the upright spring elements 96 defines three zigzag portions 100, although the number of zigzag portions 100 may be varied depending on design requirements, for example, the force required to activate seat belt adjuster and the customer quality feeling required.

Each of the first ends of the upright spring elements 96 are connected by an upper one 102 of the transverse spring elements 98 and each of the second ends of the upright spring elements are connected by a lower one 104 of the transverse spring elements 98. Two further transverse spring elements 98 span across, and therefore link, the upright spring elements 96 between the upper and lower ends. The transverse spring elements 98 provide rigidity to the larger structure of the spring member 94 and the number of the transverse spring elements 98 may be chosen depending on the design requirements of the spring member.
Expressed another way, the spring member 94 can be considered to be formed by a plurality of deformable regions comprising zigzag portions 100 bounded by the transverse spring elements 98.

In effect, each of the upright spring elements 96 acts as an individual spring that applies a restoring force to the actuator body 86 as the actuator 60 is activated.

However, since the upright spring elements 96 all act in unison, and apply the restoring force to the actuator body 86 through the upper one 102 of the transverse spring element, the combined restoring force is distributed, 'spread' or 'balanced' across a transverse region of the actuator body 86. The upper spring element 102 can therefore be considered to be a spring abutment that is common to all of the upright spring elements 96.

In this embodiment, the robustness of the upper transverse spring element 98 is enhanced by the presence of web-like walls 108 that are defined in the inboard surface 88 of the actuator body 86 and which abut against the upper one 102 of the transverse spring elements. Three walls 108 are provided here as a compromise between improving the robustness of the spring element to bear the restoring force generated by the upright spring elements 96 and to transmit it effectively to the actuator body 86 but without overly increasing the complexity of the shape of the actuator body 86.

In the embodiment of Figures 6a to 8, the transverse region, indicated here by reference numeral '110', is that length provided by the upper transverse spring element 102 and is approximately 30% of the width of the actuator body 86. Spreading the restoring force across the transverse region 110 in this way reduces the likelihood of a turning moment acting on the actuator 60 which could cause it to rotate in use, as has been described with regard to the known seat belt height adjusters. The extent to which the restoring force may be spread across the width of the actuator body 86 is here limited by the presence of other features of the actuator 60, for example the edge of the first grip portion 82 and the downward stop feature 83.

Ideally, the restoring force could be distributed across substantially the entire width of the actuator body 86. However, in practice it is preferred that the spring member 94 is configured to distribute the restoring force across a transverse region 110 that is at least 20% of the width of the actuator body 86.
As shown in Figure 6b, the spring member 94 is shown fully compressed. The bulk of the folded upright and transverse spring elements 96, 98 therefore could provide a means to limit the downward movement of the actuator 60 as the spring member 94 in effect bottoms out' at full compression.

The actuator 60 described above is one way in which the invention may be achieved although in practice any means for applying a biasing force that is distributed across a transverse region of the actuator 60, 112 would be suitable; for example, low-density blocks made from rubber or sponge material may be used, as could any other volume compressible biasing means, such as one or more gas struts.

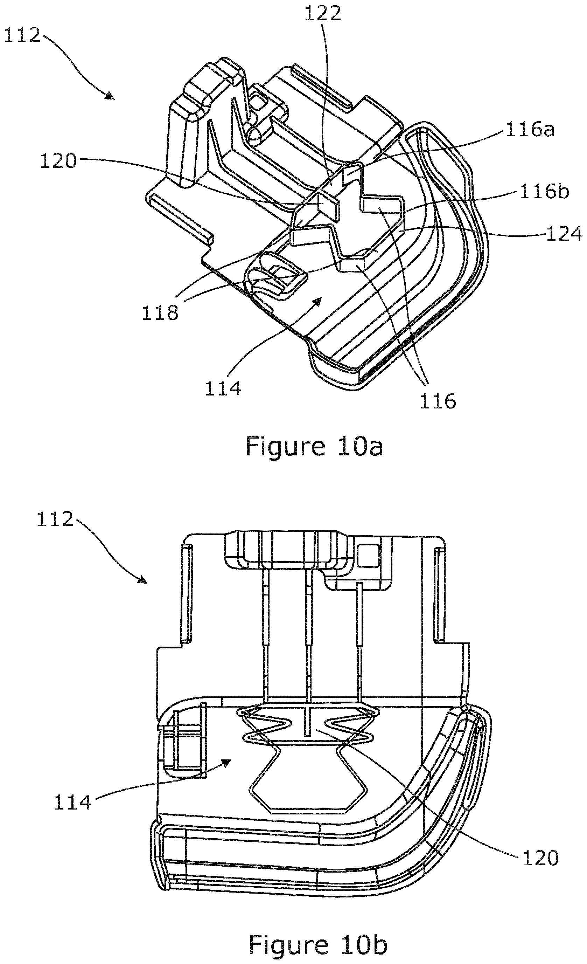

Equally, when the biasing means is a spring member 94, 114 the spring member 94, 114 may be of any shape or design that provides a biasing force that is distributed across a transverse region of the actuator 60, 112. Figures 6a to 8 show one possible design of the spring member 94 and Figures 10a and 10b show an a further embodiment of an actuator 112 with another possible design of the spring member 114. Actuator 112 is very similar in form to actuator 60 apart from the structure of its spring member 114, therefore only the differences will be described here.

As can be seen in Figure 10a, the spring member 114 of the actuator 112 has a structure somewhat resembling an hourglass, with two upright spring elements 116 that define first and second ends 116a, 116b, transverse spring elements 118, and a depth stop 120. Each of the first ends 116a of the upright spring elements 116 are connected by an upper one 122 of the transverse elements 118 and each of the second ends 116b of the upright spring elements 116 are connected by a lower one 124 of the transverse spring elements 116.

As shown in Figure 10b, the spring member 114 is shown almost fully compressed. The depth stop 120 provides a means to limit the downward movement of the actuator 112.

In both of the actuator embodiments described above, it will be noted that the spring member 94 is positioned so as to be approximately central with respect to the width of the actuator body 86. This positioning means that the restoring force applied to the actuator body 86 by the spring member 94 is in approximate alignment with the centreline (A-A; Figure 6a) of the actuator 60, 112 which promotes smooth operation of the actuator 60, 112 as it slides along the guides 70.

It should be understood that the different embodiments of the invention described herein can be combined where appropriate and that features of the embodiments of the invention can be used interchangeably with other embodiments where appropriate.

Although particular embodiments of the invention have been described in detail, this has been done by way of example and for the purposes of illustration only. The skilled person would understand that various substitutions, alterations, and modifications may be made to the invention without departing from the scope of the invention as defined by the claims.

For example, the spring member 94 has been described above as resembling a lattice or an hourglass. However, this is not essential and the spring member 94 may be configured in different ways, for example comprising separate spring elements that are joined at the tops ends by, and therefore acts against, a common spring abutment.

## Claims

1. A seat belt height adjuster (28) for a seatbelt loop, comprising:
a positioning mechanism (32) slidable on a guide rail (30) and operable to secure a seatbelt loop (56) in a selected position on the guide rail (30), the positioning mechanism (32) having a first operating state in which the positioning mechanism is locked to the guide rail (30) a second operating state in which the positioning mechanism able to slide on the guide rail (30);
an actuator (60) operable to control the operating state of the positioning mechanism (32), the actuator being movable with respect to an actuator support (58) between a first position in which the positioning mechanism is in first operating state and a second position in which the positioning mechanism is in the second operating state; **characterised in that** a biasing means (68) is configured to bias the actuator (60) against the actuator support (58), wherein the biasing means applies a restoring force that is distributed across a transverse region of the actuator;
wherein the transverse region extends across at least 20% of the width of the actuator (60), the biasing means (68) is provided integral to the actuator (60), the biasing means (68) being a spring member (94) comprising of a plurality of first spring elements (96) configured to act through a common spring abutment (102), and wherein the plurality of first spring elements (96) are linked by a plurality of second transverse spring elements.

2. The seat belt height adjuster (28) of claim 1, wherein the biasing means (68) is positioned centrally with respect to the width of the actuator (60).

3. The seat belt height adjuster (28) of claims 1 to 2, wherein the biasing means (68) forms a unitary component with the actuator (60).

4. The seat belt height adjuster (28) of claim 3, wherein the biasing means (68) and the actuator (60) are formed as a single moulded component.

5. The seat belt height adjuster (28) of claim 1, wherein the plurality of first spring elements (96) have a zigzag structure (100).

6. The seat belt height adjuster (28) of claim 1, wherein the spring member (96) is shaped to define a lattice structure.

## Patentansprüche

1. Sicherheitsgurthöhenversteller (28) für eine Sicherheitsgurtschlaufe, Folgendes umfassend:
einen Positionierungsmechanismus (32), verschiebbar auf einer Führungsschiene (30) und betriebsfähig, eine Sicherheitsgurtschlaufe (56) in einer ausgewählten Position auf der Führungsschiene (30) zu sichern, wobei der Positionierungsmechanismus (32) einen ersten Betriebszustand, in dem der Positionierungsmechanismus an der Führungsschiene (30) arretiert ist, und einen zweiten Betriebszustand, in dem der Positionierungsmechanismus in der Lage ist, auf der Führungsschiene (30) verschoben zu werden, aufweist;
einen Aktor (60), der betriebsfähig ist, den Betriebszustand des Positionierungsmechanismus (32) zu steuern, wobei der Aktor bezogen auf eine Aktorstütze (58) zwischen einer ersten Position, in der der Positionierungsmechanismus sich im ersten Betriebszustand befindet, und einer zweiten Position, in der der Positionierungsmechanismus sich im zweiten Betriebszustand befindet, bewegbar ist; **dadurch gekennzeichnet, dass** ein Vorspannmittel (68) konfiguriert ist, den Aktor (60) gegen die Aktorstütze (58) vorzuspannen, wobei das Vorspannmittel eine Rückstellkraft, die über eine Querregion des Aktors hinweg verteilt wird, aufbringt;
wobei die Querregion sich über wenigstens 20 % der Breite des Aktors (60) erstreckt, wobei das Vorspannmittel (68) einstückig mit dem Aktor (60) bereitgestellt ist, wobei das Vorspannmittel (68) ein Federelement (94) ist, das mehrere erste Federelemente (96), die zum Wirken durch ein gemeinsames Federwiderlager (102) konfiguriert sind, umfasst, und wobei die mehreren ersten Federelemente (96) durch mehrere zweite Querfederelemente verbunden sind.

2. Sicherheitsgurthöhenversteller (28) nach Anspruch 1, wobei das Vorspannmittel (68) mittig bezogen auf die Breite des Aktors (60) angeordnet ist.

3. Sicherheitsgurthöhenversteller (28) nach Anspruch 1 bis 2, wobei das Vorspannmittel (68) eine einteilige Komponente mit dem Aktor (60) ausbildet.

4. Sicherheitsgurthöhenversteller (28) nach Anspruch 3, wobei das Vorspannmittel (68) und der Aktor (60) als eine einzelne Formkomponente ausgebildet sind.

5. Sicherheitsgurthöhenversteller (28) nach Anspruch 1, wobei die mehreren ersten Federelemente (96) eine Zickzackstruktur (100) aufweisen.

6. Sicherheitsgurthöhenversteller (28) nach Anspruch 1, wobei das Federelement (96) geformt ist, eine Gitterstruktur zu definieren.

## Revendications

1. Dispositif de réglage de hauteur de ceinture de sécurité (28) pour une boucle de ceinture de sécurité, comprenant :
un mécanisme de positionnement (32) coulissant sur un rail de guidage (30) et opérationnel pour arrimer une boucle de ceinture de sécurité (56) dans une position sélectionnée sur le rail de guidage (30), le mécanisme de positionnement (32) ayant un premier état de fonctionnement dans lequel le mécanisme de positionnement est verrouillé sur le rail de guidage (30) et un second état de fonctionnement dans lequel le mécanisme de positionnement est capable de coulisser sur le rail de guidage (30) ; un actionneur (60) opérationnel pour commander l'état de fonctionnement du mécanisme de positionnement (32), l'actionneur étant mobile par rapport à un support d'actionneur (58) entre une première position dans laquelle le mécanisme de positionnement est dans un premier état de fonctionnement et une seconde position dans laquelle le mécanisme de positionnement est dans le second état de fonctionnement ; **caractérisé en ce que**
un moyen de sollicitation (68) est configuré pour solliciter l'actionneur (60) contre le support d'actionneur (58), dans lequel le moyen de sollicitation applique une force de rappel qui est répartie sur une région transversale de l'actionneur ;
dans lequel la région transversale s'étend sur au moins 20 % de la largeur de l'actionneur (60), le moyen de sollicitation (68) est prévu d'un seul tenant avec l'actionneur (60), le moyen de sollicitation (68) étant un organe de ressort (94) comprenant une pluralité de premiers éléments de ressort (96) configurée pour agir par l'intermédiaire d'une butée de ressort commune (102), et dans lequel la pluralité de premiers éléments de ressort (96) est liée par une pluralité de seconds éléments de ressort transversaux.

2. Dispositif de réglage de hauteur de ceinture de sécurité (28) selon la revendication 1, dans lequel le moyen de sollicitation (68) est positionné au centre par rapport à la largeur de l'actionneur (60).

3. Dispositif de réglage de hauteur de ceinture de sécurité (28) selon les revendications 1 et 2, dans lequel le moyen de sollicitation (68) forme un composant monobloc avec l'actionneur (60).

4. Dispositif de réglage de hauteur de ceinture de sécurité (28) selon la revendication 3, dans lequel le moyen de sollicitation (68) et l'actionneur (60) sont formés en tant que composant moulé unique.

5. Dispositif de réglage de hauteur de ceinture de sécurité (28) selon la revendication 1, dans lequel la pluralité de premiers éléments de ressort (96) a une structure en zigzag (100).

6. Dispositif de réglage de hauteur de ceinture de sécurité (28) selon la revendication 1, dans lequel l'organe de ressort (96) est conformé pour définir une structure en treillis.
